# EUROPEAN PATENT APPLICATION

(11) **EP 1 118 526 A1**
(43) Date of publication of application: **25.07.2001**
(21) Application number: 01200204.4
(22) Date of filing: 19.01.2001
(51) Int. Cl.: B62D 1/04

(54) **Motor vehicle steering wheel having improved spoke coating**

(30) Priority: 21.01.2000 IT MI000027 U
(71) Applicant: Nardi Italia S.p.A., 21040 Abbiate Guazzone (Varese) (IT)
(72) Inventor: La Perla, Giovanni, 21030 Cuveglio (Varese) (IT); Garofalo, Manfred, 37030 Verona (IT)
(74) Representative: Michelotti, Giuliano

(57) **Abstract**

In a steering wheel (10) for motor vehicles, of the kind coated by materials, such as hide, leather and the like, the spokes (20, 22) thereof are coated by means of hide flaps (40) whose ends (42, 44) are forcedly inserted into cuts (50) made along radial axes of the spokes (20, 22) themselves, or symmetrically arranged with respect to the radial axes and thereon incident.

## Description

The present invention pertains to steering wheels and, particularly, steering wheels for motor vehicles of the kind coated by a flexible and soft laminate, such as tanned or dressed hide, or leather.

The industry of motor vehicle fittings produces since long time, among other, steering wheels embodied or coated by valuable materials, such as high value wood, leathers, dressed hides and the like.

Specifically, are highly appreciated the steering wheels having their crown coated by soft hides properly dressed to allow, on a side, a comfortable hand grip of the driver on the steering wheel itself and, on another side, a particularly valuable aesthetic appearance.

There are not particular problems in coating with dressed hide the crown of a steering wheel, while some difficulties are encountered in coating the spokes connecting the crown to the central hub. It depends from the fact that, to coat the crown, it is sufficient to shape a hide portion in such a way to approximate the development of a toroidal surface, apply to the crown said portion having the rims thereof falling inside the same crown, being the rims joined by sewing. On the contrary, to hide coat the spokes, departing from the wheel crown to join the hub, have to be adopted the following approaches:
a) cutting out hide straps symmetrically shaped with respect to an axis parallel to the radial axis of the same spokes and then to wind the straps around the spokes, by connecting their rims along two brought together radial sides and along the hide portion winding the crown of the steering wheel;
b) integrally cutting out hide straps with the development of the coating winding the toriodal surface of the crown, having then to connect just their rims arranged along the two radial sides.

The second here above listed approach is, of course, more promising than the first one, because the straps are in one piece with the development winding the crown of the steering wheel, so that it remains just to connect the rims of the straps arranged along the two radial sides. However, it still has the problem of joining the two radial rims of the straps, because:
- if these two rims are sewed together, as are together sewed the rims of the coating of the wheel crown, there is a seam on the central axis of the spoke which can disturb the hand of the driver and, what is worse, can wear out in a short time by friction against the same hand, producing a fast spoiling of the seam with loss of the joining of the two and separation of the spoke straps;
- if these rims are cut out in such a way to precisely coincide, once have been wound on the spokes and glued, there is the risk of an accidental separation thereof from the spokes owing one of many reasons, comprised between the hide shrinkage, when the steering wheel remains in hot and dry environments for a long time and an expansion when the steering wheel either is in wet environments or is used by a driver having abundantly sweating hands, anyway producing this separation an unpleasant and unaesthetic effect.

To remedy the above indicated problems, there is to employ a steering wheel provided with a coating as defined by the present invention.

According to the present invention, a steering wheel for motor vehicles, consisting of a crown and spokes connecting the crown to a central hub, is provided with a hide coating consisting of one piece conformed as the development of a toroidal surface, winding the crown of the steering wheel, from which coating depart as many hide straps, as are the straps, integral with the coating itself, provided with lateral flaps, exceeding the size of the straps, sufficient to coat the spokes, to be inserted in slots cut along radial axes of the spokes themselves, or symmetrically arranged with respect to the radial axes and thereon incident.

In particular, these flaps have extension slightly less than deep of the slots in the spokes and have such a thickness that their addition is a little more than that of the slots.

The features of the invention will be particularly pointed out in the appended claims. However, other features and advantages of the invention will result from the following detailed description of an embodiment thereof, not to be considered as limiting the scope thereof, provided with the enclosed drawings, wherein:
- Figure 1 is a cross-section view of a steering wheel for motor vehicles containing the present invention;
- Figure 2 is a bottom view of a portion of wheel spoke containing the present invention;
- Figure 3 is a cross-section view taken along the line III-III of Figure 2; and
- Figure 4 is a cross-section view taken along the line III-III of Figure 2.

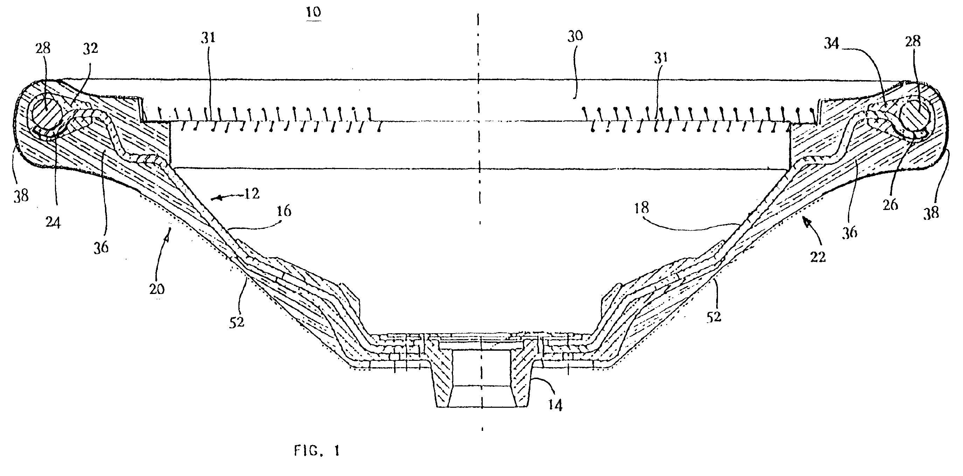

Referring to Figure 1, it is seen that a steering wheel 10 for motor vehicle comprises a metal supporting structure 12 formed by a central hub 14 from which depart legs 16, 18 forming the skeleton of spokes 20, 22. The legs 16, 18 end at the farthest place from the hub 14, in respective bent portions 24 and 26, on which abuts a metal circle 28 forming the support skeleton of a crown 30 of the steering wheel. The bent portions are firmly connected to the metal circle 28 by either metal or hard plastic inserts 32, 34. A stuffing 36 in plastic material, for example expanded resin, fills shaping them, both the spokes 20, 22 and the crown 30 of the steering wheel.

The crown 30 of the steering wheel is coated by dressed hide, depicted by a layer 38, winding the crown 30 and sewed along a sewing line 31, which layer 38 is extended in part also under the spokes 20, 22 where is solved the problem of providing a safe adhesion of the hide to the spoke without causing aesthetic drawbacks connected to sewing seams, gluing or superimposition, as has been depicted in the background defining the technical problem to be faced.

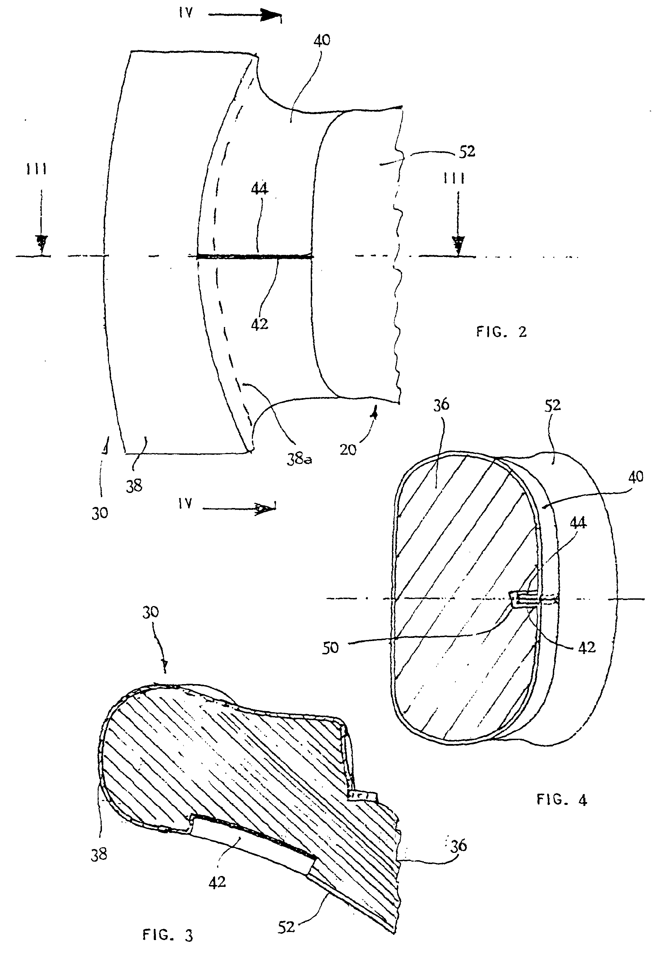

Looking at figures 2 to 4, it is seen that a hide strap 40 which is an extension of the hide layer 38, coats a connecting portion between the crown 30 and, for example, the spoke 20, being partially superimposed to the hide layer 38 of the crown 30, as indicated by the dashed line 38a, and is forcedly inserted, by means of the side flaps 42 and 44, in a slot 50 cut in the stuffing 36 where is fastened, for example, by the help of an adhesive, so that said flaps 42 and 44 cannot be accidentally get up because of stresses from the hands of the driver on the spoke 20 of the steering wheel. The remainder of the spoke 20 is usually coated by a layer 52 of a material, such as leatherette, which, even if it is of less value, has however the feature of better adhering to the stuffing 36.

It is here to observe that the approach of the two flaps 42 and 44 inserted in the slot 50 solves all the problems connected to the separation of the hide strap 40 from the spoke 20 or 22, because:
1) the flaps 42 and 44 are not directly stressed by the hands of the driver;
2) it is sufficient a slight moistening of the flaps 42 and 44, for example because of some sweating of the driver hands for swelling and locking them even more tightly in the slot 50;
3) it is sufficient to size the slot 50 and to add some sticker between the flaps 42 and 44 and the walls of the same slot 50 for preventing the separation of the strap also in case of extreme drying of the hide.

What has been here above stated discloses a preferred embodiment of the present invention not to be anyway considered as limiting, having to be intended that approaches logically similar and equivalent to the disclosed ones have to be considered as here covered, as defined by the appended claims.

## Claims

1. Steering wheel for motor vehicles, consisting of a crown (30) and spokes (20, 22) connecting the crown (30) to a central hub (14), provided with a hide coating (38) consisting of just one piece, as conformed as the development of a toroidal surface, winding the crown (30) of the steering wheel, characterized in that from the same hide coating (38) depart as many hide straps (40) as are the spokes (20, 22) of the steering wheels, integral with the same coating (38), provided with side flaps (42, 44), exceeding the size of the straps (40), sufficient to coat the spokes (20, 22), inserted in slots cut along radial axes of the same spokes (20, 22).

2. Steering wheel for motor vehicles, as in claim 1, characterized in that, alternatively, the side flaps (42, 44) are inserted into slots symmetrically arranged with respect to the radial axes and thereon incident.

3. Steering wheel for motor vehicles, as in claim 1 or 2, characterized in that, these side flaps (42, 44) have an extension a little less than the depth of the slots (50) of the spokes (20, 22) and have such a thickness that their addition is a little higher than the thickness of the slots (50).

4. Steering wheel for motor vehicles, as in claims 1 to 3, characterized in that, the flaps (42, 44) are glued at least against the walls of the slots (50) of the spokes (20, 22).
